# EUROPÄISCHE PATENTSCHRIFT

(11) **EP 0 913 046 B1**
(45) Veröffentlichungstag und Bekanntmachung des Hinweises auf die Patenterteilung: **17.10.2001**
(21) Anmeldenummer: 97931574.4
(22) Anmeldetag: 16.07.1997
(51) Int. Cl.: H04M 3/22, H04M 3/30

(54) **VERFAHREN ZUR ERMITTLUNG EINES LEITUNGSZUSTANDES EINER ÜBERTRAGUNGSLEITUNG**
PROCESS FOR DETERMINING THE LINE STATUS OF A TRANSMISSION LINE
PROCEDE POUR DETERMINER L'ETAT D'UNE LIGNE DE TRANSMISSION

(30) Priorität: 16.07.1996 AT 128096
(43) Veröffentlichungstag der Anmeldung: 06.05.1999
(73) Patentinhaber: ERICSSON AUSTRIA AKTIENGESELLSCHAFT, 1120 Wien (AT)
(72) Erfinder: STADLBAUER, Günther, A-1100 Wien (AT); STEININGER, Robert, A-2326 Lanzendorf (AT)
(74) Vertreter: Gibler, Ferdinand, Dipl.Ing. Dr. techn.
(86) Internationale Anmeldenummer: AT9700167
(87) Internationale Veröffentlichungsnummer: WO9803001

(56) Entgegenhaltungen:
- EP-A- 0 563 675
- EP-A- 0 643 519
- US-A- 4 404 636
- US-A- 4 620 069
- US-A- 5 436 953

## Beschreibung

Die Erfindung betrifft ein Verfahren zur Ermittlung des Leitungszustandes einer Übertragungsleitung, des Zustandes eines Teilnehmerendgeräts, des Leitungsabschlusses o.ä. eines Kommunikationssystems zur Übertragung von Information, z.B. eines Telephonsystems, wobei von einem an die Enden der Übertragungsleitung oder an ein Ende der Übertragungsleitung gegen Erde geschalteten Meßsignalgenerator ein Sendemeßsignal erzeugt und von einem Meßsignalempfänger das dabei entstehende Empfangsmeßsignal aufgenommen wird, und wobei vom Meßsignalgenerator ein vorzugsweise sinusförmiges Sendemeßsignal zumindest einer Frequenz auf der Übertragungsleitung gebildet wird, welches Meßsignal nach Wechselwirkung mit der Übertragungsleitung ein Empfangssignal bewirkt, und die Amplitude des Empfangsmeßsignals mit dem Meßsignalempfänger und die Phasenverschiebung zwischen dem Sende- und Empfangsmeßsignal mit einem Phasenkomparator am Ort der Sendemeßsignalerzeugung gemessen wird.

Die Ermittlung und Überwachung des Leitungszustandes von Übertragungsleitungen ist für den klaglosen Betrieb eines Kommunikationssystems sehr wichtig, da bei Auftreten eines Leitungsfehlers möglichst schnell eine Reparatur veranlaßt werden sollte, um die Funktionsfähigkeit des Systems wiederherzustellen. Im besonderen sollte beispielsweise bei einem Telephonsystem vom Wählamt aus eine grobe Abschätzung über die Art des Fehlers vornehmbar sein, um eine Entscheidung über die Bestellung der für den jeweiligen Fall zuständigen Fachleute treffen zu können. Es gibt mehrere mögliche Fehler, die auf einer Übertragungsleitung auftreten können, wobei diese von anderen Fehlern im System unterscheidbar sein müssen. So kann etwa auf der Übertragungsleitung eine Unterbrechung, ein Kurzschluß oder ein Erdschluß einer der Leitungsdrähte usw. auftreten. Um diese Fehler nun von anderen Fehlern, etwa solche beim Teilnehmer selbst zu unterscheiden, dient das eingangs genannte Verfahren. Bei den bisher bekannten Verfahren wird die Messung von Übertragungsleitungen, wie etwa Teilnehmerleitungen oder Stammleitungen von Vorfeldeinrichtungen eines Telephonsystems, durchgeführt, indem über eigens dafür vorgesehene Prüfkontakte die zu messende Leitung an die Meßanordnung angeschaltet wird, welche zentral einer großen Gruppe von Leitungen fest zugeordnet ist. Das dabei angewandte Meßprinzip besteht darin, einen Spannungssprung an die Adern der Leitung bzw. an eine Ader gegen Erde anzulegen und die Impulsantwort des Systems auszumessen, woraus dann geschlossen werden kann, in welchem Zustand die Leitung sich befindet.

Aus der US-PS-4 620 069 ist ein Verfahren zur Ermittlung des Leitungszustandes einer Übertragungsleitung bekanntgeworden, mit dessen Hilfe das Vorliegen einer Pupinspulen-Belastung überprüft werden kann. Dazu wird ein Meßsignal mit zumindest einer Frequenz an die Übertragungsleitung angekoppelt, wobei das jeweilige Teilnehmerendgerät sich in aufgelegtem Zustand befindet. Anhand der gemessenen Amplitude des resultierenden Empfangssignals sowie der Phasenverschiebung zwischen dem gesendeten und dem empfangenen Meßsignal wird der Leitungszustand der Übertragungsleitung ermittelt, sodaß eine Aussage darüber getroffen werden kann, ob die Übertragungsleitung eine Pupin-Belastung aufweist.

Der Nachteil der bekannten Verfahren dieser Art besteht darin, daß die dazu benötigten Vorrichtungen in ihrer Anschaffung mit sehr hohen Kosten verbunden sind und diese nicht immer ausreichende Information über die Art des vorliegenden Fehlers bieten.

Aufgabe der Erfindung ist es, ein Verfahren der eingangs genannten Art anzugeben, mit dem auf einfache und kostengünstige Weise eine Beurteilung des Leitungszustandes bzw. eine zuverlässige und aussagekräftige Abschätzung der Art des aufgetretenen Fehlers vorgenommen werden kann.

Erfindungsgemäß wird dies dadurch erreicht, daß nacheinander eine Vielzahl periodischer Sendemeßsignale unterschiedlicher Frequenz durch den Meßsignalgenerator gesendet und die entsprechenden Empfangssignale durch den Meßsignalempfänger sowie die gegenseitigen Phasenverschiebungen durch den Phasenkomparator gemessen werden, und daß aus den ermittelten Amplituden und Phasenverschiebungen der Empfangsmeßsignale eine Ortskurve der Übertragungsleitung interpoliert oder ein Ersatzschaltbild der Übertragungsleitung berechnet wird.

Aus der Ermittlung von Amplitude und Phasenlage des Empfangsmeßsignals kann der Zustand der Leitung, des Teilnehmerendgeräts, des bestehenden Leitungsabschlusses o.ä. beurteilt werden und die jeweils erforderlichen Maßnahmen bzw. Entscheidungen für die Behebung von Fehlern getroffen werden, wobei die Informationsausbeute so hoch ist, daß ein etwa aufgetretener Fehler sofort dem richtigen Bereich bzw. der richtigen Fehlerart zugeordnet werden kann.

Die gewonnene Ortskurve kann entweder mit theoretischen Berechnungen oder Erfahrungswerten verglichen werden, um eine Fehleranalyse vorzunehmen. Dadurch kann sehr schnell auf die Art des vorliegenden Fehlers geschlossen werden.

Aus den Werten der einzelnen Glieder des Ersatzschaltbildes kann auf einfache Weise eine Beurteilung der Übertragungsleitung vorgenommen werden.

In weiterer Ausbildung der Erfindung kann vorgesehen sein, daß das Sendemeßsignal bzw. das zugehörige Empfangsmeßsignal jeweils von einem CODEC gesendet bzw. empfangen wird, wobei über eine Steuereinheit an den digitalen Eingang des CODEC ein digitales Signal derart angelegt wird, daß durch Umwandlung desselben im CODEC ein periodisches, vorzugsweise sinusförmiges, Sendemeßsignal gebildet wird und wobei das Empfangsmeßsignal im CODEC in ein digitales Signal gewandelt wird.

Dadurch ist es möglich, einen bereits im Kommunikationssystem selbst fest eingebauten CODEC für die Zustandsbeurteilung der Übertragungsleitung heranzuziehen, indem der CODEC zur Durchführung des erfindungsgemäßen Verfahrens verwendet wird. Es können dabei Meßsignale unterschiedlichster Frequenz generiert werden, um die Übertragungsleitung auszumessen, wobei die nötige Phaseninformation aus dem angeschlossenen Phasenkomparator gewonnen werden kann. Besonders bevorzugt kann die erfindungsgemäße Schaltungsanordnung bei Schnittstellen zwischen Amt und einem Teilnehmer, zwischen dem Ortsteil einer Vorfeldeinrichtung und einem Teilnehmer (auf Kupferleitungen, Radio in the Loop und Fiber in the Loop) und auf Stammleitungen von leitungsgebundenen Vorfeldeinrichtungen mit zusätzlichen Umschalteinrichtungen angewandt werden.

Ein weiteres Merkmal der Erfindung kann darin bestehen, daß als Sendemeßsignal eine Frequenz aus dem Frequenzgemisch eines DTMF-Senders gesendet wird, wobei vorzugsweise der DTMF-Sender im CODEC integriert ist.

Dadurch kann der in modernen CODEC bereits integrierte DTMF-Sender für das erfindungsgemäße Verfahren in vorteilhafter Weise verwendet werden. Genauso können aber auch externe DTMF-Sender für die erfindungsgemäßen Zwecke angewandt werden.

Weitere Aufgabe ist es, eine Schaltungsanordnung zur Ermittlung des Leitungszustandes einer Übertragungsleitung, des Zustandes eines Teilnehmerendgeräts, des Leitungsabschlusses o.ä. eines Kommunikationssystems zur Übertragung von Information, z.B. eines Telephonsystems, mit einem Meßsignalgenerator, einem Meßsignalempfänger und einem die Phasenverschiebung zwischen dem Sende- und Empfangsmeßsignal messenden Phasenkomparator anzugeben, mit der auf einfache Weise eine Verstärkung des Sendemeßsignals und des Empfangsmeßsignals vorgenommen werden kann.

Erfindungsgemäß wird dies dadurch erreicht, daß eine aus einem Sende- und einem Empfangsverstärker gebildete Verstärkereinheit zur Verstärkung des Sende- und/oder Empfangsmeßsignals zwischen der Übertragungsleitung und dem Meßsignalgenerator bzw. dem Meßsignalempfänger schaltbar ist, wobei zwischen dem Sendeverstärker und den Enden der Übertragungsleitung jeweils eine Referenzimpedanz geschaltet und der Empfangsverstärker jeweils an die Verbindungsstelle von Referenzimpedanz und

Übertragungsleitungsende angeschlossen ist.

Bei sehr kurzen Übertragungswegen bzw. -leitungen mit niederohmigem Leitungsabschluß reicht oft das unverstärkte Sendesignal des Meßsignalgenerators nicht aus, um ein genügend hohes Empfangssignal zu erzeugen, sodaß durch diese Maßnahme Abhilfe geschaffen werden kann.

Nachstehend wird nun unter Zuhilfenahme der Zeichnungen die Erfindung anhand von Ausführungsbeispielen beschrieben. Es zeigt dabei
Fig. 1 eine Ausführungsform einer Schaltungsanordnung zur Durchführung des erfindungsgemäßen Verfahrens;
Fig.2 eine weitere Ausführungsform einer Schaltungsanordnung zur Durchführung des erfindungsgemäßen Verfahrens;
Fig.3 eine Schaltungsanordnung zur Verstärkung der im erfindungsgemäßen Verfahren ausgesendeten und empfangenen Signale und
Fig.4 ein Ersatzschaltbild von Fig.3.

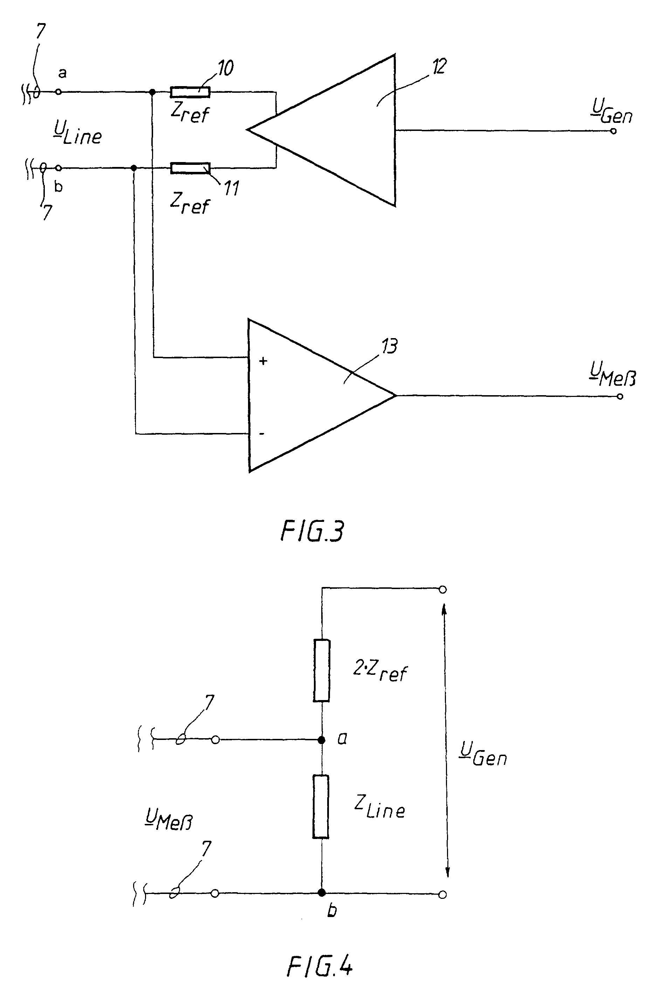

In Fig.3 und Fig.4 ist eine Schaltungsanordnung zur Durchführung des erfindungsgemäßen Verfahrens gezeigt, welches der Ermittlung des Leitungszustandes einer Übertragungsleitung 7, des Zustandes eines Teilnehmerendgerätes, des Leitungsabschlusses o.ä. eines Kommunikationssystems zur Übertragung von Information, hier eines Telephonsystems, dient. Diese Zustände können etwa so beschaffen sein, daß eine Unterbrechung der Leitung, ein Kurzschluß zwischen den Leitungsadern oder zwischen einer Ader und Erde vorliegt, daß kein Teilnehmerapparat angeschlossen ist oder weitere andere Zustände auftreten.

Dabei wird von einem an die Enden der Übertragungsleitung geschalteten Meßsignalgenerator, welcher in Fig.3 und 4 nicht dargestellt ist, ein Sendemeßsignal U_{Gen} erzeugt und von einem ebenfalls nicht dargestellten Meßsignalempfänger das entstehende Empfangsmeßsignal U_{meß} gemessen.

Eine aus einem Sende- und einem Empfangsverstärker 12, 130 gebildete Verstärkereinheit zur Verstärkung des Sende- und/oder Empfangsmeßsignals ist dabei zwischen der Übertragungsleitung 7 und dem nicht dargestellten Meßsignalgenerator bzw. dem Meßsignalempfänger geschaltet, wobei zwischen dem Sendeverstärker 12 und den Enden der Übertragungsleitung 7 jeweils eine Referenzimpedanz 10, 11 geschaltet und der Empfangsverstärker 13 jeweils an die Verbindungsstelle von Referenzimpedanz 10, 11 und Übertragungsleitungsende angeschlossen ist.

Erfindungsgemäß wird dabei auf der Übertragungsleitung 7 ein vorzugsweise sinusförmiges Sendemeßsignal U_{Gen} gebildet, welches Meßsignal nach Wechselwirkung mit dieser Übertragungsleitung 7 ein Empfangsmeßsignal bewirkt. Es wird nun jeweils die Amplitude des Empfangsmeßsignals mit dem Meßsignalempfänger und die Phasenverschiebung zwischen dem Sende- und Empfangssignal mit einem nicht dargestellten Phasenkomparator am Ort der Sendemeßsignalerzeugung gemessen und bei jeweils unterschiedlichen Frequenzen des Sendemeßsignals U_{Gen} der Leitungszustand, der Zustand eines Teilnehmerendgeräts oder des Leitungsabschlusses ermittelt.

In Fig.3 wird das an der Übertragungsleitung 7 anliegende Sendemeßsignal U_{Gen} über einen Verstärker 12 verstärkt und über Referenzwiderstände Z_{ref} auf die Leitung 7 eingespeist, wodurch nach Wechselwirkung mit der Übertragungsleitung inklusive dem Leitungsabschluß ein Empfangsmeßsignal U_{Line} bewirkt wird. Dieses wird über einen Eingangsmeßverstäker 13 geführt und dadurch das Empfangssignal U_{meß} gebildet. Durch Betragsbildung des Empfangssignals wird der Amplitudenwert ermittelt, sodaß aus diesem und der gemessenen Phasenverschiebung über mathematische Umformungen die komplexen Impedanzwerte der Übertragungsleitung für die Meßfrequenz berechnet werden können. Durch Wiederholung der Messung mit anderen Sendemeßsignalen etwa innerhalb des Sprachbandes können weitere Impedanzwerte gewonnen werden. Eine geeignete Abbildung der Meßwerte stellt die Ortskurve der errechneten Impedanzen in der komplexen Ebene dar. Weitergehende Interpretationen der gewonnenen Meßresultate sind durch Berechnung von geeigneten Ersatzschaltbildgrößen möglich.

Die Referenzimpedanzen Z_{ref} sind in Fig.3 vorzugsweise jeweils in der Höhe der halben Ausgangsimpedanz der Teilnehmerschnittstelle gewählt, welche z.B. 600Ω beträgt, oder sie werden durch eine komplexe Leitungsnachbildung realisiert. Die zwischen den Leitungsenden und den Referenzimpedanzen Z_{ref} abgegriffene Empfangsmeßspannung wird über einen Verstärker 13 verstärkt und über einen Ausgang U_{Meß} an einen Phasenkomparator weitergeleitet. Für eine Messung, bei der das Sendemeßsignal an ein Ende der Übertragungsleitung gegen Erde angelegt wird, bleibt die Anordnung unverändert.

Fig.4 zeigt ein Ersatzschaltbild von Fig.3, wobei das Sendemeßsignal U_{Gen} in Form einer vorzugsweise sinusförmigen Spannung an die Serienschaltung aus der Impedanz 2.Z_{ref} und der zu ermittelnden Leitungsimpedanz Z_{Line} angelegt wird, wobei 2. Z_{ref} wie in Fig. 3 vorzugsweise die Ausgangsimpedanz der Teilnehmerschnittstelle darstellt.

Da das an die Leitung 7 angelegte Sendemeßsignal erdsymmetrisch ist, wird auf den beiden Adern der Übertragungsleitung 7 vom Verstärker 12 über 2.Zref ein gegentaktiges Meßsignal erzeugt. Der Meßverstärker 13 setzt die symmetrische Spannung U_{Line} in U_{Meß} um.

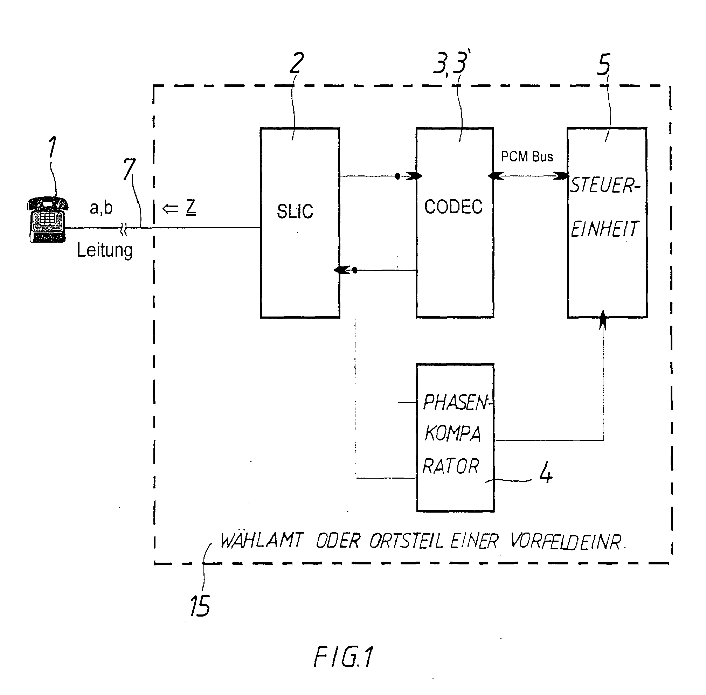

In Fig. 1 ist ein Teil eines Telephonsystems gezeigt, welches aus einem über eine Übertragungsleitung 7 mit einer zentralen Stelle 15 verbindbaren Teilnehmer 1 gebildet ist, wobei in der zentralen Stelle an die Übertragungsleitung 7 eine Teilnehmerschnittstelleneinheit (SLIC) 2 und ein zum Zwecke der Kodierung bzw. Dekodierung nachfolgender CODEC 3, 3' zur Umwandlung von analogen auf digitale Informationssignale und umgekehrt angeschlossen ist. Der CODEC ist wiederum über einen PCM-Bus mit einer Steuereinheit 5 verbunden, über welche die an den Teilnehmer 1 zu sendende bzw. von diesem empfangene Information an den CODEC weitergeleitet bzw. von diesem empfangen wird. Dies kann in analoger Form auch in anderen Kommunikationssystemen geeignet umgesetzt werden, die einen CODEC oder ein äquivalentes Kodierungs/Dekodierungselement enthalten. Die übertragene oder empfangene Information ist in ihrer Form nicht eingeschränkt und umfaßt alle Arten der Sprach- und

Dateninformation. Zur Ermittlung und Überwachung des Leitungszustandes der Übertragungsleitung 7 wird unter Anwendung des erfindungsgemäßen Verfahrens das Sendemeßsignal bzw. das zugehörige Empfangssignal jeweils vom CODEC gesendet bzw. empfangen, wobei über eine Steuereinheit an den digitalen Eingang des CODEC ein digitales Signal derart angelegt wird, daß durch Umwandlung desselben im CODEC ein periodisches, vorzugsweise sinusförmiges, Sendemeßsignal gebildet wird und wobei das Empfangsmeßsignal im CODEC in ein digitales Signal gewandelt wird.

Dies ermöglicht es, ein periodisches Signal an die Übertragungsleitung anzulegen und das durch die Wechselwirkung mit der Leitung entstandene Empfangsmeßsignal zu ermitteln. Zur Ermittlung der Phasenlage des Empfangsmeßsignals gegenüber dem Sendemeßsignal ist der CODEC 3, 3' mit dem Eingang eines Phasenkomparators 4 verbunden.

Zur einfacheren Auswertung der Meßergebnisse ist der Phasenkomparator 4 an seinem Ausgang mit einer Steuereinheit (Controller) 5 verbunden, sodaß alle Amplituden- und

Phasenmeßwerte in dieser zusammengeführt werden können, da auch der CODEC 3, 3' mit der Steuereinheit 5 verbunden ist. Die Berechnung der Leitungsimpedanz kann durch mathematische Umformung in der Steuereinheit 5 geschehen, die in der Praxis durch einen Controller, z.B. einen Mikroprozessor, einen Mikrocontroller oder einen PC realisiert wird.

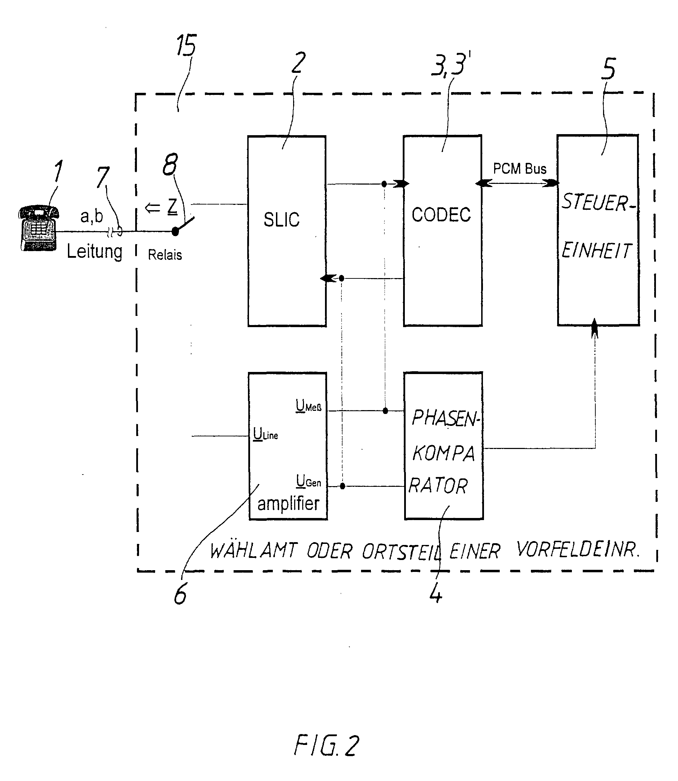

In Fig.2 ist eine weitere Variante der Erfindung dargestellt, wobei ein bidirektionaler Meßsignalverstärker 6 mittels eines Relaiskontaktes 8 zur Verstärkung des Sende- und/oder Empfangsmeßsignals zwischen der Übertragungsleitung 7 und dem CODEC 3, 3' schaltbar ist. Dies kann bei kurzen Übertragungsleitungen mit niederohmigen Leitungsabschlüssen vorteilhaft sein, da sonst das Meßempfangssignal zu schwach ist. Durch Ansteuerung des zum nicht dargestellten Relais zugehörigen Kontaktes 8 ist je nach Meßsignalstärke eine Umschaltung auf Verstärkerbetrieb möglich, wobei in Fig.2 auch die für die Meßzwecke nicht erforderliche Teilnehmerschnittstelleneinheit (SLIC) 2 durch Parallelschaltung des Verstärkers zum CODEC überbrückt wird.

Alternativ dazu kann vorgesehen sein, daß als Sendemeßsignal eine Frequenz aus dem Frequenzgemisch eines DTMF-Senders gesendet wird, wobei vorzugsweise der DTMF-Sender in einem CODEC integriert ist.

Als ein sehr gutes Mittel zur Bewertung des Leitungszustandes hat sich die Erstellung einer Ortskurve der Übertragungsleitung inkl. Leitungsabschlusses aus den gewonnenen Meßwerten herausgestellt, wobei nacheinander eine Vielzahl periodischer Sendemeßsignale unterschiedlicher Frequenz durch den CODEC 3, 3' gesendet werden und aus den ermittelten Amplituden und Phasenverschiebungen die Ortskurve der Übertragungsleitung interpoliert wird, aus welcher der Leitungszustand ermittelt wird. Es kann somit aus der Ortskurve abgelesen werden, welcher Fehler auf der Leitung vorliegt.

Eine weitere Möglichkeit der Charakterisierung des gerade vorliegenden Leitungszustandes besteht darin, daß nacheinander eine Vielzahl periodischer Sendemeßsignale unterschiedlicher Frequenz vom CODEC 3, 3' gesendet werden und aus den ermittelten Amplituden und Phasenverschiebungen ein Ersatzschaltbild der Übertragungsleitung berechnet wird. Aus dem Vergleich der Werte der einzelnen Glieder mit denen von bereits ermittelten kann nun eine Analyse vorgenommen werden.

## Patentansprüche

1. Verfahren zur Ermittlung des Leitungszustandes einer Übertragungsleitung, des Zustandes eines Teilnehmerendgeräts, des Leitungsabschlusses o.ä. eines Kommunikationssystems zur Übertragung von Information, z.B. eines Telephonsystems, wobei von einem an die Enden der Übertragungsleitung oder an ein Ende der Übertragungsleitung gegen Erde geschalteten Meßsignalgenerator (3) ein Sendemeßsignal erzeugt und von einem Meßsignalempfänger das dabei entstehende Empfangsmeßssignal aufgenommen wird, und wobei vom Meßsignalgenerator (3) ein vorzugsweise sinusförmiges Sendemeßsignal zumindest einer Frequenz auf der Übertragungsleitung (7) gebildet wird, welches Meßsignal nach Wechselwirkung mit der Übertragungsleitung (7) ein Empfangssignal bewirkt, und die Amplitude des Empfangsmeßsignals mit dem Meßsignalempfänger (3') und die Phasenverschiebung zwischen dem Sende- und Empfangsmeßsignal mit einem Phasenkomparator (4) am Ort der Sendemeßsignalerzeugung gemessen wird, **dadurch gekennzeichnet, daß** nacheinander eine Vielzahl periodischer Sendemeßsignale unterschiedlicher Frequenz durch den Meßsignalgenerator (3) gesendet und die entsprechenden Empfangssignale durch den Meßsignalempfänger (3') sowie die gegenseitigen Phasenverschiebungen durch den Phasenkomparator (4) gemessen werden, und daß aus den ermittelten Amplituden und Phasenverschiebungen der Empfangsmeßsignale eine Ortskurve der Übertragungsleitung interpoliert oder ein Ersatzschaltbild der Übertragungsleitung berechnet wird.

2. Verfahren nach Anspruch 1, **dadurch gekennzeichnet, daß** das Sendemeßsignal bzw. das zugehörige Empfangsmeßsignal jeweils von einem CODEC (3, 3') gesendet bzw. empfangen wird, wobei über eine Steuereinheit an den digitalen Eingang des CODEC (3, 3') ein digitales Signal derart angelegt wird, daß durch Umwandlung desselben im CODEC (3, 3') ein periodisches, vorzugsweise sinusförmiges, Sendemeßsignal gebildet wird und wobei das Empfangsmeßsignal im CODEC (3, 3') in ein digitales Signal gewandelt wird.

3. Verfahren nach Anspruch 1 oder 2, **dadurch gekennzeichnet, daß** als Sendemeßsignal eine Frequenz aus dem Frequenzgemisch eines DTMF-Senders gesendet wird, wobei vorzugsweise der DTMF-Sender im CODEC integriert ist.

4. Schaltungsanordnung zur Ermittlung des Leitungszustandes einer Übertragungsleitung, des Zustandes eines Teilnehmerendgeräts, des Leitungsabschlusses o.ä. eines Kommunikationssystems zur Übertragung von Information, z.B. eines Telephonsystems, mit einem Meßsignalgenerator (3), einem Meßsignalempfänger (3') und einem die Phasenverschiebung zwischen dem Sende- und Empfangsmeßsignal messenden Phasenkomparator (4), **dadurch gekennzeichnet, daß** eine aus einem Sende- und einem Empfangsverstärker (12, 13) gebildete Verstärkereinheit zur Verstärkung des Sende- und/oder Empfangsmeßsignals zwischen der Übertragungsleitung (7) und dem Meßsignalgenerator (3) bzw. dem Meßsignalempfänger (3') schaltbar ist, wobei zwischen dem Sendeverstärker (12) und den Enden der Übertragungsleitung (7) jeweils eine Referenzimpedanz (10, 11) geschaltet und der Empfangsverstärker (13) jeweils an die Verbindungsstelle von Referenzimpedanz (10, 11) und Übertragungsleitungsende angeschlossen ist.

## Claims

1. A method for determining the line status of a transmission line, the status of a subscriber's terminal, the line termination or the like of a communications system for transmitting information, e.g. of a telephone system, with a send measuring signal being produced by a measuring signal generator (3) which is switched to the ends of the transmission line or to one end of the transmission line against ground and with the receive measuring signal thus produced being taken up by a measuring signal receiver, and with a preferably sinusoidal send measuring signal of at least one frequency being formed on the transmission line (7) by the measuring signal generator (3), which measuring signal causes a received signal following the interaction with the transmission line (7) and the amplitude of the receive measuring signal is measured with the measuring signal receiver (3') and the phase displacement between the send and receive measuring signal is measured with a phase comparator (4) at the location of the send measuring signal generation, **characterized in that** a plurality of periodic send measuring signals of different frequency are successively transmitted by the measuring signal generator (3) and the respective received signals are measured by the measuring signal receiver (3') and the mutual phase displacements by the phase comparator (4) and that a locus diagram of the transmission line is interpolated from the determined amplitudes and phase displacements of the receive measuring signals, or an equivalent circuit diagram of the transmission line is calculated.

2. A method as claimed in claim 1, **characterized in that** the send measuring signal or the associated receive measuring signal is transmitted or received by a CODEC (3, 3'), with a digital signal being applied via a control unit to the digital input of the CODEC (3, 3') in such a way that by conversion of the same in the CODEC (3, 3') a periodic, preferably sinusoidal, send measuring signal is formed and with the receive measuring signal being converted in the CODEC (3, 3') into a digital signal.

3. A method as claimed in claim 1 or 2, **characterized in that** a frequency from the frequency spectrum of a DTMF transmitter is transmitted as a send measuring signal, with the DTMF transmitter preferably being integrated in the CODEC.

4. A circuit arrangement for determining the line status of a transmission line, the status of a subscriber's terminal, the line termination or the like of a communications system for transmitting information, e.g. of a telephone system, with a measuring signal generator (3), a measuring signal receiver (3') and a phase comparator (4) measuring the phase displacement between the send and receive measuring signal, **characterized in that** an amplification unit formed from a transmitting and receiving amplifier (12, 13) for amplifying the send and/or receive measuring signal can be switched between the transmission line (7) and the measuring signal generator (3) or the measuring signal receiver (3'), with a reference impedance (10, 11) being switched between the transmitting amplifier (12) and the ends of the transmission line (7), and the receiving amplifier (13) being connected to the connecting point of reference impedance (10, 11) and transmission line end.

## Revendications

1. Procédé pour la détermination de l'état d'une ligne de transmission, de l'état d'un appareil terminal d'abonné, de la terminaison de ligne ou similaire dans un système de communication pour la transmission d'informations, par exemple un réseau téléphonique, dans lequel un générateur de signaux de mesure (3) connecté à la terre aux extrémités de la ligne de transmission ou à une extrémité de la ligne de transmission génère un signal de mesure émis et un récepteur de signaux de mesure capte le signal de mesure reçu ainsi produit, et dans lequel le générateur de signaux de mesure (3) forme sur la ligne de transmission (7) un signal de mesure émis de préférence sinusoïdal d'au moins une fréquence, lequel signal de mesure produit après une interaction avec la ligne de transmission (7) un signal de réception, l'amplitude du signal de mesure de réception est mesurée avec le récepteur de signaux de mesure (3') et le déphasage entre le signal émis et le signal reçu est mesuré par un comparateur de phases (4) sur le lieu de génération du signal, **caractérisé en ce qu'**une pluralité de signaux de mesure émis périodiques de différentes fréquences est émise successivement par le générateur de signaux de mesure (3) et les signaux de réception correspondants sont mesurés par le récepteur de signaux de mesure (3') et le déphasage entre eux est mesuré par un comparateur de phases (4), et **en ce qu'**un lieu de réponse en fréquences de la ligne de transmission est interpolé ou un schéma de connexions de substitution pour la ligne de transmission calculé à partir des amplitudes et des déphasages déterminés pour les signaux de mesure de réception.

2. Procédé selon la revendication 1, **caractérisé en ce que** le signal de mesure émis et le signal de mesure reçu correspondant sont émis ou reçus par un CODEC (3, 3'), une unité de mesure appliquant un signal numérique à l'entrée numérique du CODEC (3, 3') de telle sorte que la transformation de ce signal dans le CODEC (3, 3') forme un signal de mesure émis périodique, de préférence sinusoïdal, et le signal de mesure de réception étant transformé en signal numérique dans le CODEC (3, 3').

3. Procédé selon la revendication 1 ou 2, **caractérisé en ce que** le signal de mesure émis est une fréquence extraite du spectre de fréquences d'un émetteur multifréquences à deux tonalités, lequel est de préférence intégré dans le CODEC.

4. Circuit pour la détermination de l'état d'une ligne de transmission, de l'état d'un appareil terminal d'abonné, de la terminaison de ligne ou similaire dans un système de communication pour la transmission d'informations, par exemple un réseau téléphonique, avec un générateur de signaux de mesure (3), un récepteur de signaux de mesure (3') et un comparateur de phases (4) mesurant le déphasage entre les signaux de mesure émis et reçus, **caractérisé en ce qu'**une unité d'amplificateur formée d'un amplificateur d'émission et d'un amplificateur de réception (12, 13) peut être connectée entre la ligne de transmission (7) et le générateur de signaux de mesure (3) ou le récepteur de signaux de mesure (3') pour amplifier le signal émis et/ou reçu, une impédance de référence (10, 11) étant montée entre l'amplificateur d'émission (12) et chaque extrémité de la ligne de transmission (7) et l'amplificateur de réception (13) étant connecté à un point de connexion de chaque impédance de référence (10, 11) et à l'extrémité de la ligne de transmission.
